# EUROPÄISCHE PATENTSCHRIFT

(11) **EP 1 016 630 B1**
(45) Veröffentlichungstag und Bekanntmachung des Hinweises auf die Patenterteilung: **28.12.2005**
(21) Anmeldenummer: 99126201.5
(22) Anmeldetag: 30.12.1999
(51) Int. Cl.: C02F 1/32

(54) **Vorrichtung zur UV-Bestrahlung, insbesondere zur Desinfektion von strömenden Flüssigkeiten mit verminderter UV-Transmission**
Apparatus for ultraviolet irradiation and disinfection of flowing sewage with reduced UV transmission coefficients
Dispositif d'irradiation ultraviolette et de désinfection pour les eaux usées ayant des coefficients de transmission UV réduits

(30) Priorität: 30.12.1998 DE 19860530
(43) Veröffentlichungstag der Anmeldung: 05.07.2000
(73) Patentinhaber: Wedeco AG, 32051 Herford (DE)
(72) Erfinder: Wedekamp, Horst, 32105 Bad Salzuflen (DE)
(74) Vertreter: Lenzing, Andreas

(56) Entgegenhaltungen:
- EP-A- 0 809 936
- US-A- 4 367 410
- US-A- 4 757 205
- US-A- 5 418 370
- US-A- 5 660 719

## Beschreibung

Die Erfindung betrifft eine Vorrichtung mit den Merkmalen des Oberbegriffs des Anspruchs 1 und ein Verfahren zur UV-Bestrahlung, insbesondere zur Desinfektion, von strömenden Flüssigkeiten mit verminderter UV-Transmission. Die Vorrichtung besitzt einen oder mehrere Halterahmen mit einer Vielzahl von UV-Modulen, die jeweils einen Quecksilberdampf-Niederdruckstrahler enthalten. Die UV-Module sind durch die Halterahmen im wesentlichen parallel im Abstand voneinander gehalten und erstrecken sich in Strömungsrichtung der Flüssigkeit, bei der es sich insbesondere um gereinigtes Abwasser handelt.

Vorrichtungen dieser Art werden insbesondere bei Kläranlagen eingesetzt, denn das gereinigte Abwasser von Kläranlagen muss heute immer öfter vor der Einleitung in natürliche Gewässer desinfiziert werden. Zu diesem Zweck wird das durch die Kläranlage gereinigte Abwasser einer ultravioletten Strahlung (UV-Bestrahlung) ausgesetzt. Die dabei verwendeten UV-Module mit Quecksilberdampf-Niederdruckstrahlern erzeugen ultraviolette Strahlen im Wellenlängenbereich von etwa 200 nm bis 300 nm mit einem Maximum bei 253,7 nm.

Die UV-Module sind als UV-Tauchstrahler ausgebildet und umfassen jeweils einen Quecksilberdampf-Niederdruckstrahler, welcher von einem für UV-Strahlung durchlässigen Hüllrohr umgeben ist. Entsprechende Vorrichtungen der soweit beschriebenen Art zur UV-Bestrahlung sind beispielsweise aus den Dokumenten EP 0687201, DE 3270676, US 4,757,205, US 5,019,256, US 4,482,809, EP 0080780 und EP 0249450 bekannt.

In der Patentschrift US 5,418,370 wird für eine möglichst gute Desinfektionsleistung vorgeschlagen, das zu behandelnde Fluid so dicht wie möglich an der Strahlungsquelle vorbeizuführen. Auf diese Weise wird die Strahlungsintensität an der Oberfläche der Hüllrohre maximal. Hierzu ist ein möglichst geringer Abstand zwischen dem Hüllrohr und dem UV-Strahler einzuhalten. Die Desinfektionsleistung dieser bekannten UV-Desinfektionsanlage ist aber bei verminderter UV-Transmission nicht zufriedenstellend.

Im Gegensatz zu sauberem, unbeeinflusstem Wasser weist gereinigtes und zu desinfizierendes Abwasser eine stark verminderte UV-Transmission auf. Sie liegt normalerweise im Bereich von 40% bis 60% pro 1 cm Schichtdicke liegt. Dies bedeutet, dass bereits in einer 1 cm dünnen Wasserschicht 40% - 60% der applizierten UV-Strahlung absorbiert werden und die wirksame Eindringtiefe auf lediglich ca. 5 cm beschränkt ist (zum Vergleich: reines Trinkwasser hat eine Transmission im Bereich von etwa 90% bis 98%, die Absorptionsverluste betragen folglich nur 2% bis 10% pro cm Schichtdicke, was einer vergleichbaren wirksamen Eindringtiefe von ca. 2 m bis 2,5 m entspricht).

Die schlechte UV-Transmission und geringe wirksame Eindringtiefe für UV-Strahlung hat zur Folge, dass derartige Medien nur in relativ dünnen Schichtdicken, wie sie sich z.B. im unmittelbaren Umkreis von Strahlerhüllrohren (UV-Module) ergeben, effektiv durchstrahlt werden können.

In derartigen Anwendungsfällen ist mit den herkömmlichen Vorrichtungen aufgrund ihrer Bestückung mit UV-Modulen, die einerseits kleine Querschnitte im Verhältnis zu den sie umgebenden Bestrahlungsräumen und andererseits UV-Strahlerquellen mit geringen Strahlungsleistungen aufweisen, die zur Abtötung von Mikroorganismen erforderliche UV-Dosis nur bei längeren Kontaktzeiten des Mediums mit der UV-Strahlung, d. h. bei geringen Fließgeschwindigkeiten, zu applizieren.

Die herkömmlichen Vorrichtungen sind mit ca. 1 bis 1,5 m langen UV-Modulen bestückt, deren Quecksilberdampf-Niederdruckstrahler mit Durchmessern von 15 bis maximal 25 mm UV-Emissionen in Leistungsgrößen von 0,18 bis zu 0,66 W/cm Entladungslänge erzeugen und deren Hüllrohre einen Außendurchmesser von maximal 33 mm nicht überschreiten, wobei der Ringspalt, der zwischen dem Außendurchmesser des Strahlerrohrs und dem Innendurchmesser des Hüllrohrs gebildet wird, eine Breite von höchstens 2,5 mm aufweist. Die volle Strahlungsleistung von 0,66 W/cm Entladungslänge der derzeit technisch ausgereiftesten und leistungsfähigsten UV-Module erfordert aufgrund der geringen Isolationswirkung des kleinen Ringspaltes Temperaturen des umgebenden Mediums von über 20 °C. Strahlungsleistungen von 0,5 W/cm oder 0,4 W/cm sind nur zu erzielen, wenn Mediumstemperaturen von 15 bis 20 °C bzw. größer als 10 °C eingehalten werden. Ferner sind die Abstände der UV-Module zueinander und damit die sich hieraus ergebenden Bestrahlungsräume so bemessen, daß ihre Volumina ca. 12 bis 16 mal so groß oder größer ist als das Volumen der UV-Module (einschließlich UV-Strahler). Mit diesen Größenverhältnissen sind besonders hohe und zuverlässige Desinfektionsleistungen, d. h. Desinfektionsleistungen, die keinen wesentlichen Schwankungen bei den üblichen Transmissionsänderungen unterliegen, in der Praxis nicht zu gewährleisten.

Es ist deshalb Aufgabe der vorliegenden Erfindung, für derartige Flüssigkeiten eine Vorrichtung für wirkungsvollere, zuverlässigere Desinfektionswirkungen bei kürzeren Kontaktzeiten, d.h. für größere Abwassermengen pro Zeiteinheit bei höheren und turbulenten Fließgeschwindigkeiten zu ermöglichen.

Diese Aufgabe wird von einer Vorrichtung mit dem Merkmalen des Anspruchs 1 gelöst.

Weil der UV-Strahler eine a-malgamdotierte Niederdruckgasentladungslampe mit einem Durchmesser von mindestens 2,0 cm ist und daß der innere Hüllrohrdurchmesser mindestens 6 mm und maximal 30 mm größer ist als der äußere Durchmesser des UV-Strahlers kann die höhere Energiedichte vorrangig zur Verkürzung der Kontaktzeiten, d. h. zur Erhöhung der Fließgeschwindigkeiten bzw. der Durchsatzmengen, genutzt werden.

Im Praxisversuch hat sich weiterhin überraschend gezeigt, daß bei gleichen Abmessungen allein die Vergrößerung der UV-Moduldurchmesser und die damit verbundene Verkleinerung der Bestrahlungsräume nochmals zur Erhöhung und vor allem zur Stabilisierung des Desinfektionseffektes führt. Bei der Desinfektion von Abwasser ist es enorm wichtig, daß bei den hier üblichen typischen Änderungen der UV-Transmission keine wesentlichen Schwankungen im Desinfektionseffekt auftreten. Aus den Erfahrungen umfangreicher Praxisversuche hat sich die Einhaltung folgender Abmessungen als besonders vorteilhaft ergeben:

Maximales Verhältnis der Volumina der UV-Module zu den Volumina der Bestrahlungsräume bei UV-Transmissionen bis zu T(1 cm) = 40 %:
- bei Moduldurchmesser: 25 - 30 mm 1:12
30 - 35 mm 1:11
35 - 40 mm 1: 9
40 - 45 mm 1: 8
45 - 50 mm 1: 7

Ringspaltbreite R in Abhängigkeit der Mediumstemperatur:
0 °C bis 10 °C R > 4 mm
10 °C bis 25 °C R > 3 mm

UV-Strahlerrohrdurchmesser und UV-Strahlungsleistungen:
Ø 15 bis 20 mm ~ 0,3 W/cm
Ø 25 mm bis 0,6 W/cm
Ø 32 mm bis 1,1 W/cm
Ø 38 mm bis 1,3 W/cm

In Verfolgung dieser Zielsetzung sind die UV-Module mit Hochleistungs-Quecksilberdampf-Niederdruckstrahlern bestückt, die mit Strahlerrohrdurchmessern im Bereich von 22 bis 36 mm über Strahlungsleistungen von ca. 0,6 W bis über 1,1 W/cm Entladungsmenge im Spektralbereich von 200 nm bis 300 nm verfügen und hiermit größere Bestrahlungsstärken als bislang möglich an den Oberflächen der Hüllrohre erzeugen.

In praktischen Versuchen hat sich überraschend gezeigt, daß durch eine Vergrößerung der Hüllrohrdurchmesser und die damit einhergehende Verkleinerung der Bestrahlungsräume ein höherer Desinfektionseffekt erzielt werden kann.

Als Ergebnis aus diesen Maßnahmen hat sich insgesamt ergeben, daß zur Erzielung zumindest gleicher oder höherer Desinfektionseffekte die Volumina der Bestrahlungsräume im Vergleich zu den Volumina der UV-Module von dem heute üblichen 12 bis 18-fachen auf das 5 bis 11-fache und insbesondere auf das 7,5 bis 10-fache herabgesetzt werden kann.

Dabei ist der Abstand der UV-Module voneinander so gewählt, daß der Querschnitt des Bestrahlungsraumes, der sich für jedes UV-Modul ergibt, um nicht mehr als das 16,5-fache bei Moduldurchmessern von 28 mm, um nicht mehr als das 14-fache bei Moduldurchmessern von 45 mm und nicht mehr als das 11,5-fache bei Moduldurchmessern von 55 mm größer als der Querschnitt des UV-Moduls ist, und daß die Quecksilber-Niederdruckstrahler der UV-Module über eine Strahlungsleistung von mindestens 0,55 W/cm Entladungslänge im Spektralbereich von - 200 - 300 nm verfügen und daß sich hieraus Bestrahlungsstärken von mindestens 60 mW/cm² für 28 mm, mindestens 50 mW/cm² für 35 mm, mindestens 38 mW/cm² für 45 mm und mindestens 30 mW/cm² für 55 mm ergeben. Vorzugsweise ist der Querschnitt des Bestrahlungsraumes eines UV-Moduls um nicht mehr als das 7,5-fache größer als der Querschnitt des UV-Moduls selbst.

Weiter ist es Aufgabe der vorliegenden Erfindung, ein Verfahren zur UV-Bestrahlung, insbesondere zur Desinfektion, von strömenden Flüssigkeiten mit verminderter UV-Transmission zu schaffen, bei dem eine erhöhte Fließgeschwindigkeit der Flüssigkeit möglich ist.

Dies wird gemäß Anspruch 8 durch folgende Merkmale erreicht:
a) Anordnung einer Vorrichtung (10) in einer Bestrahlungskammer, wobei die Vorrichtung mindestens einen Halterahmen (12), mit einer Vielzahl von UV-Modulen (14) umfasst, die parallel zueinander in Strömungsrichtung des gereinigten Abwassers angeordnet sind, und wobei jedes UV-Modul (14) als Tauchstrahler ausgebildet und jeweils aus einem als Quecksilber-Niederdruckstrahler ausgebildeten UV-Strahler (26) gebildet ist, der von einem für UV-Strahlen durchlässigen Hüllrohr (28) mit mindestens 30 mm Außendurchmesser umgeben ist, wobei der UV-Strahler (26) einen Durchmesser von mindestens 2,0 cm aufweist und wobei der innere Hüllrohrdurchmesser mindestens 6 mm und maximal 30 mm größer ist als der äußere Durchmesser des UV-Strahlers (26);
b) Beaufschlagen der UV-Strahler (26) mit elektrischer Leistung, so dass die Quecksilber-Niederdruckstrahler der UV-Module eine Strahlungsintensität von größer/gleich 60 mW / cm² auf der Hüllrohroberfläche des Hüllrohres im Bereich von 200 nm - 280 nm emittieren;
c) Zuführen der zu desinfizierenden Flüssigkeit in die Bestrahlungskammer und Ausleiten der desinfizierten Flüssigkeit mit einer Fließgeschwindigkeit von mehr als 0, 25 m/s.

Der Begriff Hochleistungs-Quecksilber-Niederdruckstrahler bezieht sich auf Strahler mit einer Entladungslänge von mindestens 70 cm und eine Strahlungsleistung von mehr als 0,55 W pro cm im Neuzustand und wenigstens 0,2 W/cm am Ende der Nutzungszeit bzw. als kleinster Regelwert. Der Begriff "Bestrahlungsraum", der sich für jedes UV-Modul ergibt, wird nachfolgend näher erläutert.

Im folgenden wird ein Ausführungsbeispiel der vorliegenden Erfindung anhand der Zeichnung beschrieben. Es zeigen:
- Fig. 1:: eine erfindungsgemäße UV-Vorrichtung in einer schematischen perspektivischen Darstellung; sowie
- Fig. 2:: eine elektrische Beschaltung zur Regelung der UV-Strahler.

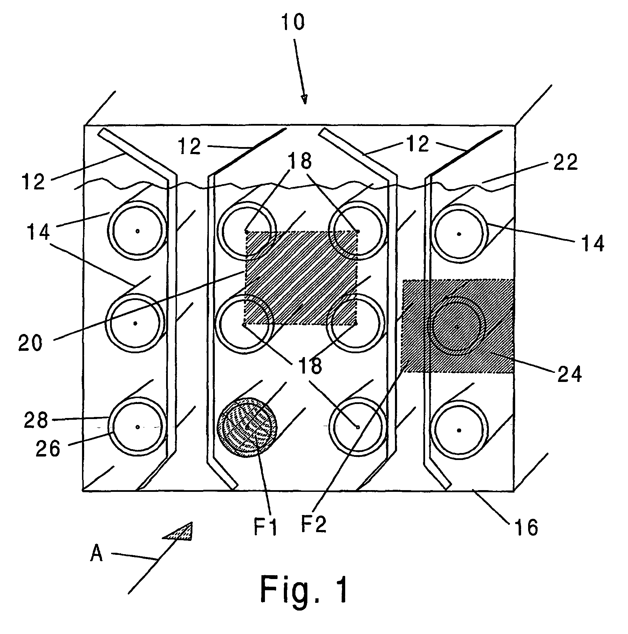

In der Figur 1 ist in einer schematischen perspektivischen Darstellung eine UV-Vorrichtung 10 mit Rahmen 12 gezeigt, welche UV-Module 14 tragen. Jedes UV-Modul 14 umfasst einen Hochleistungs-Quecksilber-NiederdruckStrahler 26, die in der Zeichnung nicht dargestellt sind, und von denen jeder in an sich bekannter Weise von einem Hüllrohr umgeben ist. In der Zeichnung sind lediglich die Hüllrohre zu erkennen.

Die Vorrichtung 10 ist in einem nicht näher dargestellten Gerinne angeordnet, in welchem das Abwasser in Richtung des Pfeils A fließt, und welches einen Gerinneboden 16 besitzt. Die waagerecht verlaufenden UV-Module 14 sind in der Weise angeordnet, dass ihre Mittelpunkte 18 die Eckpunkte eines gedachten Quadrates 20 bilden. Sämtliche UV-Module 14 befinden sich in der Zeichnung im Abwasser unterhalb der Wasseroberfläche 22.

Jedem UV-Modul 14 ist ein Bestrahlungsraum 24 zugeordnet, der durch einen um ein UV-Modul 14 gedachten Raum gebildet ist, in dem sich als Mittelpunkt das UV-Modul 14 befindet. Der Bestrahlungsraum 24 ist im Querschnitt quadratisch ausgebildet und erstreckt sich von einem UV-Modul 14 ausgehend jeweils bis zur Hälfte des Abstandes zu den benachbarten UV-Modulen und entspricht in seiner Querschnittsfläche dem Querschnitt des gedachten Quadrates 20.

Bei der Erfindung ist der Abstand der UV-Module 14 derart gewählt, dass die Querschnittsfläche F2 des Bestrahlungsraumes jedes UV-Moduls 14 um nicht mehr als das 10-fache - insbesondere nicht mehr als das 7,5-fache - größer ist als die Querschnittsfläche F1 des betreffenden UV-Moduls 14. Es gilt somit der Zusammenhang F2 kleiner/gleich 10 x F1 (bzw. vorzugsweise F2 kleiner/gleich 7,5 x F1).

Die Hochleistungs-Quecksilber-Niederdruckstrahler mit ihrer großen Strahlungsleistung bewirken auf der Hüllrohroberfläche eine hohe Strahlungsintensität von 30 mW/cm² bis größer/gleich 60 mW/cm² in Abhängigkeit vom Moduldurchmesser. Dabei kommen Hüllrohre mit vergleichsweise großem Außendurchmesser von mindestens 2,8 cm zum Einsatz. Trotz der relativ großen Oberflächen der Hüllrohre wird wegen der erwähnten Hochleistungs-Quecksilber-Niederdruckstrahler gleichwohl auf der Oberfläche eine erhöhte Strahlungsintensität erreicht.

In Versuchen hat sich überraschend gezeigt, dass mit der Erfindung eine wesentlich höhere Strömungsgeschwindigkeit des Abwassers möglich ist, und dass pro Zeiteinheit entscheidend größere Abwassermengen desinfiziert werden können, wodurch der Wirkungsgrad der erfindungsgemäßen Vorrichtung bis zum Vielfachen verbessert wird. In zweckmäßiger Ausgestaltung der Erfindung besitzen die UV-Strahler 26 einen Außendurchmesser von etwa 20 mm bis 40 mm, wobei der Ringspalt zwischen den UV-Strahlern und dem umgebenden Hüllrohr mindestens 3,0 mm und vorzugsweise 4 bis 6 mm beträgt.

In weiterer zweckmäßiger Ausgestaltung der Erfindung werden zur Erzielung einer hohen Strahlungsleistung amalgamdotierte Hochleistungs-Quecksilber-Niederdruckstrahler verwendet. In zweckmäßiger Ausgestaltung der Erfindung werden diese Niederdruckstrahler zur Erzielung hoher Strahlungsleistungen bei hohen Wirkungsgraden mit elektronischen Vorschaltgeräten betrieben, wie sie beispielesweis durch das Dokument DE 196 37 906 A1 bekannt sind. Dabei können zwei oder mehr Niederdruckstrahler mit einem gemeinsamen elektronischen Vorschaltgerät betrieben werden.

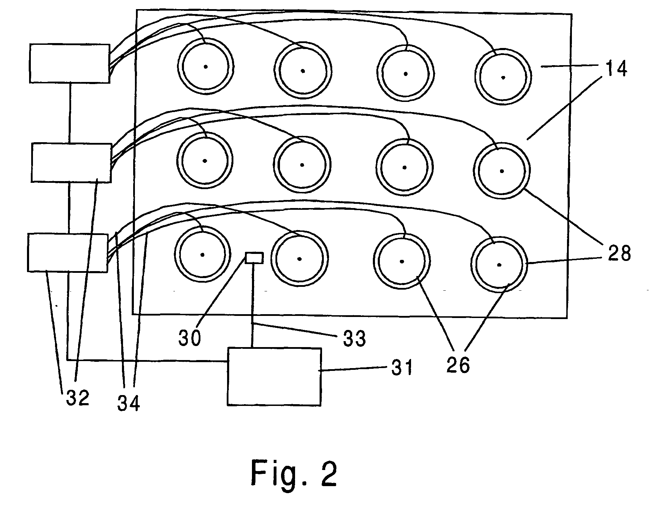

Hierzu zeigt die Figur 2 in einer schematischen Darstellung eine Anordnung von Strahlermodulen 14 entsprechend Fig. 1 mit einem Strahlungssensor 30, einer Steuerung 31 und elektronischen Vorschaltgeräten 32, die zur Ansteuerung der UV-Strahler 26 vorgesehen sind. Der Strahlungssensor 30 misst die in einem definierten Abstand von dem Hüllrohr 28 einfallende Strahlungsintensität in mW/cm² und übermittelt den Messwert über eine elektrische Leitung 33 an die Steuerung 31. Dort wird der Messwert mit der vorgesehenen Strahlungsintensität, die für einen erfektiven Betrieb der Anlage erforderlich ist, verglichen. Die über die elektronischen Vorschaltgeräte 32 an die Strahler 26 abgegebene elektrische Leistung wird dann so geregelt, dass im wesentlichen nicht mehr und nicht weniger als dieser optimale Wert der Strahlungsintensität erreicht wird.

Dabei ergibt sich als weiterer Vorteil eine Regelbarkeit der Strahler, die je nach Transmission des Mediums eine geringere als die maximal mögliche Strahlungsleistung einstellbar macht.

Zur Steigerung der UV-Strahlungsleistung sind amalgamdotierte Hochleistungs-Quecksilberdampf-Niederdruckstrahler für den regelbaren Betrieb an elektronischen Vorschaltgeräten für die UV-Module entwickelt worden. In Abhängigkeit von ihrem jeweiligen Rohrdurchmesser in den Größen von 20 bis 38 mm können UV-Emissionen mit Leistungen von 0,6 W bis 1,4 W/cm Entladungslänge erzeugt werden. Diese Leistungen konnten bislang nur von speziellen Quecksilberdampf-Niederdruckstrahlern mit Zapfenkühlung unter definierten Laborbedingungen annähernd erbracht werden. Mit den neuen Strahlenquellen werden im Praxisbetrieb ohne zusätzliche Hilfseinrichtungen, d. h. nur mit optimierten Ringspaltabmessungen zwischen Strahlerrohr und Hüllrohr, Bestrahlungsstärken auf bzw. über dem Hüllrohr erzeugt, wie sie bislang nicht realisierbar waren.

Mit dem Einsatz dieser neuen leistungsstärkeren UV-Strahlenquellen und ihrer verbesserten Einbaulage (Pufferzone) im Hüllrohr ergeben sich weiterhin UV-Module, die auf unterschiedliche Milieutemperaturen im Bereich von 0 °C bis 60 °C einstellbar sind und deren UV-Emission im Leistungsbereich von 100 % bis 30 % bei stets optimalem Wirkungsgrad stufenlos regelbar ist.

Bei dem erfindungsgemäßen Verfahren wird die Anlage zunächst so konfiguriert, dass sich im Normalbetrieb eine mittlere Strömungsgeschwindigkeit von größer als 0,25 m/s einstellt, wobei unter einem Normalbetrieb eine Zulaufmenge verstanden wird, bei der der Flüssigkeitsspiegel im Bestrahlungsraum ständig oberhalb des obersten Strahlermoduls liegt. Weiter werden bei diesem Verfahren Strahlermodule von mehr als 30 mm Außendurchmesser mit einer Leistung von mindestens 0,5W UV pro cm Strahlerlänge (im Neuzustand) verwendet. So ist es möglich, eine turbulente Strömung mit guter Durchmischung zu erreichen, die die Bildung von nicht bestrahlten Bereichen (sog. Totwasserzonen) verhindert. Trotz der relativ hohen Strömungsgeschwindigkeit wird eine wirksame Strahlungsdosis pro Masseneinheit der Flüssigkeit appliziert, weil die Strahlungsintensität hoch und die UV-Absorption im Bestrahlungsraum aufgrund der neuen geometrischen Verhältnisse zwischen Moduldurchmesser und Bestrahlungsraumquerschnitt relativ gering ist. Schließlich kann das Verfahren auch bei sehr kaltem Abwasser knapp oberhalb des Gefrierpunkts angewendet werden, weil der Luftspalt zwischen dem Strahler und dem Hüllrohr für eine Wärmeisolation des Strahlers sorgt. Er kühlt nicht unterhalb seiner Betriebstemperatur ab. Dieses Verhalten ist mit Moduldurchmessern unterhalb von 30 mm nicht zu erreichen.

Der Alterungsprozess von Hg-Niederdruckstrahlern im Betrieb bewirkt, dass die eingangs erwähnte Strahlungsleistung von beispielsweise 0,5W UV-C pro Zentimeter Strahlerlänge absinkt, wobei die Leistungsaufnahme etwa gleich bleibt. Die Regelbarkeit der UV-Strahler ermöglicht deshalb erstmals eine Konfiguration, die auf einen sicheren Betrieb mit ausreichendem Wirkungsgrad am Ende der planmäßigen Standzeit ausgelegt ist, also z.B. mit 0,2 W UV-C pro Zentimeter Entladungslänge ausreichende Desinfektion gewährleistet. Diese Strahlungsleistung kann dann am Beginn der Nutzungsdauer mit der Regelung eingestellt werden. Hierzu wir die zugeführte elektrische Leistung beispielsweise um 60% reduziert. Mit zunehmender Alterung kann dann die Strahlungsleistung konstant gehalten werden, indem die zugeführte Leistung angehoben wird. Diese Regelung kann über UV-Sensoren erfolgen, die die tatsächlich abgegebene Strahlungsleistung messen und über einen Regelkreis bedarfsgerecht anpassen.

Mit der vorliegenden Konfiguration von Strahlern und Hüllrohren ist eine solche Regelung erstmals möglich, da der Ringspalt zwischen dem Strahler und dem Hüllrohr mit mindestens 3,0 mm so groß dimensioniert ist, dass auch bei gesenkter Leistungsaufnahme der Strahler nicht unter seine minimal erforderliche Betriebstemperatur abkühlt.

## Patentansprüche

1. Vorrichtung (10) zur UV-Bestrahlung, insbesondere zur Desinfektion, von strömenden Flüssigkeiten in Form von gereinigtem Abwasser, wobei die Vorrichtung (10) in einer Bestrahlungskammer angeordnet ist und mindestens einen Halterahmen (12) mit einer Vielzahl von UV-Modulen (14) umfasst, die parallel zueinander in Strömungsrichtung (A) des gereinigten Abwassers angeordnet sind, und wobei jedes UV-Modul (14) als Tauchstrahler ausgebildet und jeweils aus einem als Quecksilber-Niederdruckstrahler ausgebildeten UV-Strahler (26) gebildet ist, der von einem für UV-Strahlen durchlässigen Hüllrohr (28) umgeben ist, **dadurch gekennzeichnet, dass** der UV-Strahler eine a-malgamdotierte Niederdruckgasentladungslampe mit einem Durchmesser von mindestens 2,0 cm ist und daß der innere Hüllrohrdurchmesser mindestens 6 mm und maximal 30 mm größer ist als der äußere Durchmesser des UV-Strahlers.

2. Vorrichtung nach Anspruch 1, **dadurch gekennzeichnet, dass** die UV-Module (14) jeweils einen Hochleistungs-UV-Strahler (26) enthalten, welcher eine Entladungslänge von mindestens 1,2 m aufweist und eine Strahlungsleistung von mehr als 60 Watt UV-C pro 1 m Entladungslänge erzeugt.

3. Vorrichtung nach einem der vorhergehenden Ansprüche, **dadurch gekennzeichnet, dass** der UV-Strahler (26) eines UV-Moduls (14) einen Außendurchmesser zwischen 20 mm und 30 mm besitzt.

4. Vorrichtung nach einem der vorhergehenden Ansprüche, **dadurch gekennzeichnet, dass** die UV-Strahler (26) mit einem regelbaren elektronischen Vorschaltgerät betrieben sind, mit welchem die elektrische Leistung der UV-Strahler (26) regelbar ist.

5. Vorrichtung nach Anspruch 7, **dadurch gekennzeichnet, dass** mindestens zwei UV-Strahler (26) mit einem gemeinsamen elektronischen Vorschaltgerät betrieben sind.

6. Vorrichtung nach einem der vorhergehenden Ansprüche, **dadurch gekennzeichnet, dass** die elektrische Leistung der UV-Strahler (26) so geregelt ist, dass eine konstante Strahlungsleistung im UV-Bereich erzeugt wird.

7. Vorrichtung nach einem der vorhergehenden Ansprüche, **dadurch gekennzeichnet, dass** die elektrische Leistung der UV-Strahler (26) in Abhängigkeit von der UV-Transmission der Flüssigkeit und/oder in Abhängigkeit von der Fließgeschwindigkeit der Flüssigkeit geregelt ist.

8. Verfahren zur UV-Bestrahlung, insbesondere zur Desinfektion, von strömenden Flüssigkeiten in Form von gereinigtem Abwasser mit folgenden Merkmalen:
a) Anordnung einer Vorrichtung (10) in einer Bestrahlungskammer, wobei die Vorrichtung mindestens einen Halterahmen (12), mit einer Vielzahl von UV-Modulen (14) umfasst, die parallel zueinander in Strömungsrichtung des gereinigten Abwassers angeordnet sind, und wobei jedes UV-Modul (14) als Tauchstrahler ausgebildet und jeweils aus einem als Quecksilber-Niederdruckstrahler ausgebildeten UV-Strahler (26) gebildet ist, der von einem für UV-Strahlen durchlässigen Hüllrohr (28) mit mindestens 30 mm Außendurchmesser umgeben ist, wobei der UV-Strahler (26) einen Durchmesser von mindestens 2,0 cm aufweist und wobei der innere Hüllrohrdurchmesser mindestens 6 mm und maximal 30 mm größer ist als der äußere Durchmesser des UV-Strahlers (26);
b) Beaufschlagen der UV-Strahler (26) mit:elektrischer Leistung, so dass die Quecksilber-Niederdruckstrahler der UV-Module eine Strahlungsintensität von größer/gleich 60 mW/ cm² auf der Hüllrohroberfläche des Hüllrohres im Bereich von 200 nm - 280 nm emittieren;
c) Zuführen der zu desinfizierenden Flüssigkeit in die Bestrahlungskammer und Ausleiten der desinfizierten Flüssigkeit mit einer Fließgeschwindigkeit von mehr als 0,25 m/s.

9. Verfahren nach Anspruch 8, **dadurch gekennzeichnet, dass** die Fließgeschwindigkeit auf mehr als 0,4 m/s eingestellt wird.

10. Verfahren nach Anspruch 8 oder 9, **dadurch gekennzeichnet, dass** die elektrische Leistung der UV-Strahler (26) zur Emission einer im wesentlichen konstanten UV-Strahlungsleistung geregelt ist.

## Claims

1. A device (10) for UV irradiation, particularly for disinfection, of flowing liquids in the form of treated waste water, the device (10) being arranged in an irradiation chamber and comprising at least one support frame (12) with a plurality of UV modules (14) which are arranged parallel to one another in the direction of flow (A) of the treated waste water, and each UV module (14) being in the form of an immersion emitter and being formed from a UV emitter (26) in the form of a low-pressure mercury emitter which is surrounded by a tubular sleeve (28) transparent to UV rays, **characterised in that** the UV emitter is an amalgam-doped low-pressure gas discharge lamp with a diameter of at least 2.0 cm and **in that** the internal tubular sleeve diameter is at least 6 mm and a maximum of 30 mm larger than the external diameter of the UV emitter.

2. A device according to claim 1, **characterised in that** the UV modules (14) each contain a high-power UV emitter (26) which has a discharge length of at least 1.2 m and generates a radiant power of more than 60 Watts UV-C per 1 m of discharge length.

3. A device according to either one of the preceding claims, **characterised in that** the UV emitter (26) of a UV module (14) has an external diameter of between 20 mm and 30 mm.

4. A device according to any one of the preceding claims, **characterised in that** the UV emitters (26) are operated with a controllable electronic ballast with which the electrical power of the UV emitters (26) is controllable.

5. A device according to claim 7, **characterised in that** at least two UV emitters (26) are operated with a common electronic ballast.

6. A device according to any one of the preceding claims, **characterised in that** the electrical power of the UV emitters (26) is controlled in such a way that a constant radiant power in the UV range is generated.

7. A device according to any one of the preceding claims, **characterised in that** the electrical power of the UV emitters (26) is controlled as a function of the UV transmission of the liquid and/or as a function of the flow rate of the liquid.

8. A method of UV irradiation, particularly for disinfection, of flowing liquids in the form of treated waste water, having the following features:
a) arranging a device (10) in an irradiation chamber, the device comprising at least one support frame (12) with a plurality of UV modules (14), which are arranged parallel to one another in the direction of flow of the treated waste water, and each UV module (14) being in the form of an immersion emitter and being formed from a UV emitter (26) in the form of a low-pressure mercury emitter, which is surrounded by a UV ray-transparent tubular sleeve (28) with an external diameter of at least 30 mm, the UV emitter (26) having a diameter of at least 2.0 cm and the internal tubular sleeve diameter being at least 6 mm and a maximum of 30 mm larger than the external diameter of the UV emitter (26);
b) supplying electrical power to the UV emitter (26), such that the low-pressure mercury emitters of the UV modules emit a radiation intensity in the 200 nm - 280 nm range of greater than/equal to 60 mW/cm² on the tubular sleeve surface of the tubular sleeve;
c) feeding the liquid to be disinfected into the irradiation chamber and discharging the disinfected liquid at a flow rate of more than 0.25 m/s.

9. A method according to claim 8, **characterised in that** the flow rate is set at more than 0.4 m/s.

10. A method according to claim 8 or claim 9, **characterised in that** the electrical power of the UV emitters (26) is controlled for the emission of a substantially constant UV radiant power.

## Revendications

1. Dispositif (10) d'irradiation ultraviolette, en particulier pour la désinfection de liquides s'écoulant sous forme d'eaux usées purifiées, le dispositif (10) étant agencé dans une chambre d'irradiation et comprenant au moins un châssis de fixation (12) avec une pluralité de modules UV (14) qui sont disposés parallèlement les uns aux autres dans la direction d'écoulement (A) des eaux usées purifiées, et chaque module UV (14) étant configuré comme un émetteur immergé et étant constitué d'un émetteur UV (26) conçu sous forme d'un émetteur au mercure à basse pression qui est entouré d'un tube de gainage (28) transparent aux rayons UV, **caractérisé en ce que** l'émetteur UV est une lampe à décharge gazeuse à basse pression dopée à l'amalgame avec un diamètre d'au moins 2,0 cm et **en ce que** le diamètre intérieur du tube de gainage est plus grand au minimum de 6 mm et au maximum de 30 mm que le diamètre extérieur de l'émetteur UV.

2. Dispositif selon la revendication 1, **caractérisé en ce que** les modules UV (14) contiennent chacun un émetteur UV de grande puissance (26) qui présente une longueur de décharge d'au moins 1,2 m et qui génère une puissance d'irradiation de plus de 60 watts UV-C pour 1 m de longueur de décharge.

3. Dispositif selon l'une quelconque des revendications précédentes, **caractérisé en ce que** l'émetteur UV (26) d'un module UV (14) a un diamètre extérieur compris entre 20 mm et 30 mm.

4. Dispositif selon l'une quelconque des revendications précédentes, **caractérisé en ce que** les émetteurs UV (26) sont commandés par un ballast électronique réglable avec lequel la puissance électrique des émetteurs UV (26) peut être réglée.

5. Dispositif selon la 7, **caractérisé en ce qu'**au moins deux émetteurs UV (26) sont commandés par un ballast électronique commun.

6. Dispositif selon l'une quelconque des revendications précédentes, **caractérisé en ce que** la puissance électrique des émetteurs UV (26) est réglée de telle manière qu'une puissance d'irradiation constante est générée dans la plage UV.

7. Dispositif selon l'une quelconque des revendications précédentes, **caractérisé en ce que** la puissance électrique des émetteurs UV (26) est réglée en fonction de la transmission UV du liquide et/ou en fonction de la vitesse d'écoulement du liquide.

8. Procédé d'irradiation ultraviolette, en particulier pour la désinfection de liquides s'écoulant sous forme d'eaux usées purifiées, avec les caractéristiques suivantes :
a) Agencement d'un dispositif (10) dans une chambre d'irradiation, le dispositif comprenant moins un châssis de fixation (12) avec une pluralité de modules UV (14) qui sont disposés parallèlement les uns aux autres dans la direction d'écoulement (A) des eaux usées purifiées, et chaque module UV (14) étant configuré comme un émetteur immergé et étant constitué d'un émetteur UV (26) conçu sous forme d'un émetteur au mercure à basse pression qui est entouré d'un tube de gainage (28) transparent aux rayons UV ayant un diamètre extérieur d'au moins 30 mm, l'émetteur UV (26) ayant un diamètre d'au moins 2,0 cm et le diamètre intérieur du tube de gainage étant plus grand au minimum de 6 mm et au maximum de 30 mm que le diamètre extérieur de l'émetteur UV (26) ;
b) Alimentation des émetteurs UV (26) avec une puissance électrique de sorte que les émetteurs au mercure à basse pression des modules UV émettent une intensité d'irradiation égale/supérieure à 60 mW/cm² sur la surface du tube de gainage dans la plage comprise entre 200 nm et 280 nm ;
c) Amenée du liquide à désinfecter dans la chambre d'irradiation et évacuation du liquide désinfecté avec une vitesse d'écoulement supérieure à 0,25 m/s.

9. Procédé selon la revendication 8, **caractérisé en ce que** la vitesse d'écoulement est réglée à plus de 0,4 m/s.

10. Procédé selon la revendication 8 ou 9, **caractérisé en ce que** la puissance électrique des émetteurs UV (26) est réglée pour l'émission d'une puissance d'irradiation UV sensiblement constante.
